# EUROPÄISCHE PATENTANMELDUNG

(11) **EP 2 628 948 A2**
(43) Veröffentlichungstag der Anmeldung: **21.08.2013**
(21) Anmeldenummer: 13155233.3
(22) Anmeldetag: 14.02.2013
(51) Int. Cl.: F03D 7/02, F16D 65/18, F16D 66/00, F16D 125/06, F16D 121/04, F16D 125/16

(54) **Hydraulisch betätigbare Scheibenbremse und Azimutantrieb**

(30) Priorität: 17.02.2012 DE 102012202438; 05.09.2012 DE 202012008610 U
(71) Anmelder: Stromag Wep GmbH, 59425 Unna (DE)
(72) Erfinder: Böhm, Peter, Dr, 59423 Unna (DE); Mikolajczyk, Olaf, 59425 Unna (DE)
(74) Vertreter: Patentanwälte Ruff, Wilhelm, Beier, Dauster & Partner

(57) **Zusammenfassung**

Bekannt ist eine hydraulisch betätigbare Scheibenbremse, insbesondere für einen Azimutantrieb einer horizontal drehbaren Gondel einer Windkraftanlage, mit einem Bremsengehäuse, das einen Kolbenraum umfasst, in dem wenigstens ein Bremskolben hubbeweglich gelagert ist, der einen Reibbelag auf einer einer abzubremsenden Bremsscheibe zugewandten Stirnseite umfasst, und dem auf einer gegenüberliegenden Stirnseite als Teil des Kolbenraumes ein Druckraum zugeordnet ist, der zur Betätigung des Bremskolbens durch ein Hydraulikmedium druckbeaufschlagbar ist, wobei dem Bremskolben oder dem Kolbenraum wenigstens eine Ringdichtung zugeordnet ist, die den Bremskolben gegenüber dem Druckraum abdichtet.

Es wird vorgeschlagen, dass in einer an der Bremsscheibe (2) anl iegenden Funktionsstellung des montierten Reibbelages (7a, 7b) die Ringdichtung (8) in einem Abstand - in Hubrichtung des Bremskolbens (4a, 4b; 4b'; 4b"; 4b'") gesehen - zu einem dem Druckraum zugewandten Stirnrand (S) des Bremskolbens (4a, 4b; 4b'; 4b"; 4b'") angeordnet ist, der kleiner oder gleich einer Dicke des Reibbelages (7a, 7b) bezogen auf einen Ausgangszustand des Reibbelages zum Montagezeitpunkt ist.

## Beschreibung

Die Erfindung betrifft eine hydraulisch betätigbare Scheibenbremse, insbesondere für einen Azimutantrieb einer horizontal drehbaren Gondel einer Windkraftanlage, mit einem Bremsengehäuse, das einen Kolbenraum umfasst, in dem wenigstens ein Bremskolben hubbeweglich gelagert ist, der einen Reibbelag auf einer einer abzubremsenden Bremsscheibe zugewandten Stirnseite umfasst, und dem auf einer gegenüberliegenden Stirnseite als Teil des Kolbenraumes ein Druckraum zugeordnet ist, der zur Betätigung des Bremskolbens durch ein Hydraulikmedium druckbeaufschlagbar ist, wobei dem Bremskolben oder dem Kolbenraum wenigstens eine Ringdichtung zugeordnet ist, die den Bremskolben gegenüber dem Druckraum abdichtet.

Die Erfindung betrifft zudem einen Azimutantrieb einer horizontal drehbaren Gondel einer Windkraftanlage mit mehreren derartigen Scheibenbremsen, die einer horizontal drehbaren Bremsscheibe des Azimutantriebes zugeordnet sind, sowie mit einer Steuereinrichtung zur Ansteuerung der Scheibenbremsen.

Eine derartige, hydraulisch betätigbare Scheibenbremse ist für einen Azimutantrieb einer horizontal drehbaren Gondel einer Windkraftanlage aus der DE 10 2009 049 906 A1 bekannt. Die bekannte Scheibenbremse weist ein Bremsengehäuse auf, das mit zwei gegensinnig zueinander hydraulisch betätigbaren Bremskolben versehen ist, die in montiertem Zustand im Bereich einer Bremsscheibe des Azimutantriebs die Bremsscheibe zangenartig von oben und von unten beaufschlagen. Jeder Bremskolben weist einen Reibbelagträger sowie einen auf dem Reibbelagträger aufgebrachten Reibbelag auf, wobei der Reibbelagträger an einer der Bremsscheibe zugewandten Stirnseite des jeweiligen Bremskolbens angeordnet ist. Auf der von dem Reibbelag abliegenden Stirnseite ist jedem Bremskolben ein Druckraum zugeordnet, der Teil eines den Bremskolben aufnehmenden Kolbenraumes des Bremsengehäuses ist. Jeder Bremskolben ist mit Hilfe von zwei Dichtringen gegenüber dem Kolbenraum des Bremsengehäuses abgedichtet. Der Druckraum ist durch ein Hydraulikmedium, vorliegend ein Hydrauliköl, beaufschlagbar, wodurch der jeweilige Bremskolben eine entsprechende lineare Hubbewegung zur Bremsscheibe hin durchführt. Wenn im Betrieb jeder Scheibenbremse die Bremsscheibe des Azimutantriebs der Gondel der Windkraftanlage abgebremst und gehalten werden muss, ergeben sich Verschleißerscheinungen am Reibbelag, die zu einem allmählichen Abtragen des Reibbelages führen. Sobald der Reibbelag abgetragen ist, gelangt der metallische Reibbelagträger auf der Bremsscheibe zur Anlage. Bei fortgesetzter Druckbeaufschlagung der Bremskolben kann die Auflage des metallischen Reibbelagträgers auf der Bremsscheibe zu Beschädigungen dieser Bremsscheibe führen. Der Bremsscheibe sind eine Vielzahl von Scheibenbremsen zugeordnet, die über den Umfang der Bremsscheibe verteilt angeordnet sind. Bereits der metallische Kontakt der Bremsscheibe des Azimutantriebs mit lediglich einem einzelnen Reibbelagträger einer einzelnen Scheibenbremse kann zu einer so starken Beschädigung der Bremsscheibe führen, dass die gesamte Bremsscheibe ausgetauscht werden muss.

Aufgabe der Erfindung ist es, eine Scheibenbremse und einen Azimutantrieb der eingangs genannten Art zu schaffen, durch die Beschädigungen der Bremsscheibe bei starken Verschleißerscheinungen der Scheibenbremse vermieden werden können.

Diese Aufgabe wird für die Scheibenbremse dadurch gelöst, dass in einer an der Bremsscheibe anliegenden Funktionsstellung des montierten Reibbelages die Ringdichtung in einem Abstand - in Hubrichtung des Bremskolbens gesehen - zu einem dem Druckraum zugewandten Stirnrand des Bremskolbens angeordnet ist, der kleiner oder gleich einer Dicke des Reibbelages bezogen auf einen Ausgangszustand des Reibbelages zum Montagezeitpunkt ist. Durch die erfindungsgemäße Lösung tritt im Bereich der Ringdichtung Leckage auf, sobald der Reibbelag im Wesentlichen abgetragen ist. Diese Leckage kann in dem Bremssystem, dem die Scheibenbremse zugeordnet ist, erfasst werden, so dass geeignete Gegenmaßnahmen, wie insbesondere ein Abschalten der Scheibenbremse und ein Austausch des wenigstens einen Reibbelages erfolgen kann, bevor eine Beschädigung der Bremsscheibe erfolgt.

Die der Erfindung zugrundeliegende Aufgabe wird auch dadurch gelöst, dass der Bremskolben wenigstens eine Leckageprofilierung aufweist, die an einem Kolbenmantel des Bremskolbens derart angeordnet ist, dass in einer an der Bremsscheibe anliegenden Funktionsstellung des montierten Reibbelages ein Abstand der Leckageprofilierung zu der Ringdichtung geringer oder gleich einer Dicke des Reibbelages bezogen auf einen Ausgangszustand des Reibbelages zum Montagezeitpunkt ist. Die zuerst beschriebene erfindungsgemäße Lösung sieht Maßnahmen zur gewollten Leckage durch entsprechende Anordnung der Ringdichtung im Kolbenraum relativ zum Bremskolben vor. Bei der zweitgenannten Lösung werden Kolbenraum und Ringdichtung gegenüber bekanntem Stand der Technik nicht modifiziert. Vielmehr erfolgen hier die Maßnahmen zur Erzielung einer gewollten Leckage durch entsprechende Gestaltung des Bremskolbens selbst. In beiden Fällen wird die auftretende Leckage von einem zugeordneten Bremsensystem erfasst, wodurch entsprechende Gegenmaßnahmen wie ein Abschalten der wenigstens einen Scheibenbremse sowie ein Austausch des wenigstens einen Reibbelages erfolgen können. Die jeweilige erfindungsgemäße Lösung ist vorteilhaft für ein Bremsensystem eines Azimutantriebs einer horizontal drehbaren Gondel einer Windkraftanlage vorgesehen, wobei das Bremsenssystem mehrere erfindungsgemäße Scheibenbremsen aufweist, die gemeinsam über einen Umfang einer horizontal ausgerichteten, einzelnen Bremsscheibe zugeordnet sind.

In Ausgestaltung der Erfindung sind Mittel zum Erfassen einer im Bereich der Ringdichtung auftretenden Leckage vorgesehen. Die Mittel zum Erfassen von Leckage weisen vorzugsweise Mittel zum Aufnehmen und Ableiten von Leckagemengen zu einem Leckagespeicher auf. Zudem weisen die Mittel zum Erfassen von Leckage wenigstens einen Sensor auf, der im Speicher aufgenommene Leckagemengen erfasst, oder der einen Druckabfall in einem Hydrauliksystem zur Beaufschlagung des Druckraumes der wenigstens einen Scheibenbremse erfasst.

In weiterer Ausgestaltung der Erfindung umfasst das Bremsengehäuse zwei gegenläufig zueinander bewegliche Bremskolben, die in montiertem Zustand zwischen sich die Bremsscheibe einschließen. Diese Ausgestaltung ist vorzugsweise für eine Scheibenbremse eines Azimutantriebs einer horizontal drehbaren Gondel einer Windkraftanlage vorgesehen. Die Bremskolben werden synchron druckbeaufschlagt oder gelüftet.

In weiterer Ausgestaltung der Erfindung umfasst die Leckageprofilierung eine in Umfangsrichtung am Kolbenmantel umlaufende Ringnut. Die Ringnut kann durchgängig über den gesamten Umfang des Kolbenmantels einen gleichbleibenden Querschnitt aufweisen. Alternativ kann die Ringnut durch mehrere, über den Umfang des Kolbenmantels fluchtend verteilt angeordnete Ringnutabschnitte gebildet sein, die in Umfangsrichtung zueinander beabstandet sind.

In weiterer Ausgestaltung der Erfindung umfasst die Leckageprofilierung wenigstens einen sich mit zumindest einer Richtungskomponente in Hubrichtung des Bremskolbens erstreckenden Leckagekanal. Der wenigstens eine Leckagekanal ist als am Kolbenmantel vorgesehene Leckagenut und/oder als sich von einer dem Druckraum zugewandten Stirnseite des Bremskolbens bis zu einem seitlichen Austritt am Kolbenmantel schräg oder axial und radial gestuft erstreckende Leckagebohrung gestaltet und dient dazu, Hydraulikmedium vom Druckraum über den wenigstens einen Leckagekanal axial - d.h. in Hubrichtung des Bremskolbens - an der Ringdichtung vorbeizuleiten, um einen gewünschten Leckagestrom zu erzielen, sobald ein entsprechender Verschleiß des Reibbelages vorhanden ist.

In weiterer Ausgestaltung der Erfindung ist dem Kolbenraum wenigstens eines Bremskolbens eine den Bremskolben koaxial umgebende Aufnahmeprofilierung für Leckagemengen zugeordnet, die in Druckrichtung des Bremskolbens hinter der Ringdichtung angeordnet und mit einem Ableitanschluss zur Abführung der Leckagemengen verbunden ist. Die Aufnahmeprofilierung ist vorzugsweise als ringförmige Aufnahmenut ausgeführt, die in der Wandung des Kolbenraumes des Bremsengehäuses integriert ist. Die Aufnahmeprofilierung kann zusätzlich mit einer weiteren Ringdichtung versehen sein.

In weiterer Ausgestaltung der Erfindung sind der Aufnahmeprofilierung am Umfang des Bremskolbens anliegende Abstreifmittel zugeordnet, die die Leckagemengen vom Bremskolben weg in den Ableitanschluss umleiten. Die Abstreifmittel umfassen vorzugsweise wenigstens einen Abstreifring, der in die Aufnahmeprofilierung eingebettet ist und am Bremskolben entlangströmende Leckagemengen auffängt und in den Ableitanschluss umleitet. Leckagemengen treten erst dann auf, wenn der Reibbelag im Betrieb der Scheibenbremse soweit abgetragen ist, dass Hydraulikmedium an der ersten, dem Druckraum für den Bremskolben benachbarten Ringdichtung vorbeigeleitet werden kann. Die wenigstens eine Leckageprofilierung am Umfang des Bremskolbens ist in ihrer Anordnung ebenfalls bezogen auf die erste, dem Druckraum des Bremskolbens zugewandte Ringdichtung an der Innnenwandung des Kolbenraumes.

Für den Azimutantrieb wird die der Erfindung zugrundeliegende Aufgabe dadurch gelöst, dass die Steuereinrichtung mit den Mitteln zum Erfassen einer im Bereich einer Ringdichtung wenigstens eines Bremskolbens auftretenden Leckage verbunden ist. Die Steuereinrichtung kann demzufolge nach Erkennen der Leckage eines Bremskolbens einer Scheibenbremse entsprechende Steuermaßnahmen einleiten, die insbesondere die entsprechende Scheibenbremse abschalten und/oder den Azimutantrieb stillsetzen kann, um eine Demontage der betreffenden Scheibenbremse zu ermöglichen. Das Abschalten der Scheibenbremse kann vorzugsweise durch ein Drucklosschalten der Scheibenbremse erfolgen. Anschließend kann die Scheibenbremse demontiert und der entsprechende Reibbelag ausgetauscht werden. In vorteilhafter Weise umfasst die Steuereinrichtung Mittel zum separaten Ansteuern jeder Scheibenbremse. Dadurch ist gewährleistet, dass die Steuereinrichtung jede einzelne Scheibenbremse, die aufgrund des entsprechenden Verschleißes ihres Reibbelages die Gefahr einer Beschädigung der Bremsscheibe birgt, abschalten kann.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt perspektivisch in schematischer Darstellung einen Ausschnitt einer Windkraftanlage mit einer horizontal drehbaren Gondel, die über einen Azimutantrieb antreibbar ist,
- Fig. 2: in einer Schnittdarstellung eine Ausführungsform einer erfindungsgemäßen Scheibenbremse in normalem Betriebszustand,
- Fig. 3: die Scheibenbremse nach Fig. 2, jedoch in einem Leckagezustand,
- Fig. 4: in vergrößerter Darstellung einen Ausschnitt III der Scheibenbremse nach Fig. 3, in dem ein entsprechender Leckagestrom erkennbar ist,
- Fig. 5: schematisch einen Ausschnitt einer weiteren Ausführungsform einer erfindungsgemäßen Scheibenbremse ähnlich Fig. 2,
- Fig. 6: einen Ausschnitt einer weiteren Ausführungsform einer erfindungsgemäßen Scheibenbremse ähnlich Fig. 5,
- Fig. 7: einen Ausschnitt einer weiteren Ausführungsform einer erfindungsgemäßen Scheibenbremse ähnlich Fig. 6,
- Fig. 8a und 8b: die Scheibenbremse nach Fig. 5 in unterschiedlichen Verschleißzuständen,
- Fig. 9a und 9b: die Scheibenbremse nach Fig. 6 in zwei unterschiedlichen Verschleißzuständen und
- Fig. 10a und 10b: die Scheibenbremse nach Fig. 7 in zwei unterschiedlichen Verschleißzuständen.

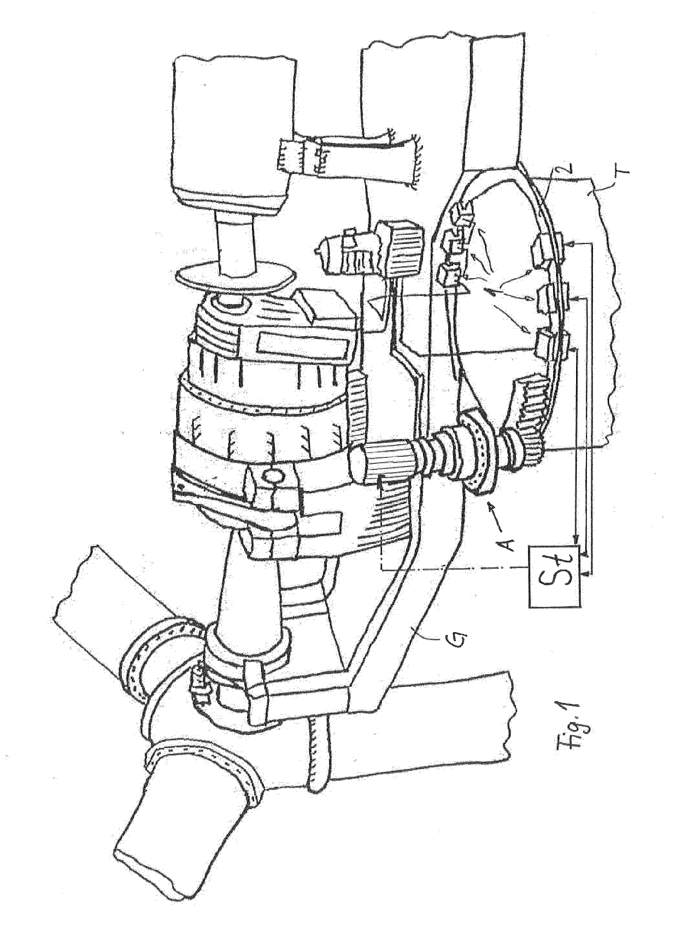

Eine Windkraftanlage gemäß Fig. 1 weist einen auf einem festen Untergrund verankerten, vertikal aufragenden Turm T auf. Auf dem Turm T ist eine Gondel G horizontal drehbar gelagert, die einen Rotor mit drei Rotorblättern trägt. Der Rotor treibt über ein Getriebe einen Generator an, der zur Stromerzeugung dient, sobald die Rotorblätter durch Windkraft zu einer Drehung des Rotors führen. Die Gondel G ist an dem Turm T um eine vertikale Drehachse drehbar gelagert. Eine entsprechende Drehbewegung der Gondel G horizontal um die vertikale Drehachse erfolgt durch einen Azimutantrieb A, dem ein Bremsensystem 1'b zugeordnet ist. Das Bremsensystem umfasst eine in einer Horizontalebene ausgerichtete Bremsscheibe 2, die beim dargestellten Ausführungsbeispiel stationär zum Turm T montiert ist. Der Bremsscheibe 2 ist eine Vielzahl von über den Umfang der Bremsscheibe 2 verteilt angeordneten Scheibenbremsen 1 zugeordnet, die im Bereich der Gondel G montiert sind und gemeinsam mit dieser koaxial zur Bremsscheibe 2, die ebenfalls koaxial zur vertikalen Drehachse ist, drehbeweglich sind. Alle Scheibenbremsen 1 sind identisch zueinander gestaltet und sind an einem gemeinsamen Träger gehalten, der drehfest mit der Gondel G verbunden ist. Alle Scheibenbremsen 1 werden hydraulisch durch ein Hydraulikmedium in Form eines Hydrauliköls mit Druck beaufschlagt. Eine Steuereinrichtung St ist zur Steuerung entsprechender Hydraulikkreisläufe für die hydraulische Ansteuerung der Scheibenbremsen 1 vorgesehen. Die Steuereinrichtung St dient zudem zur elektrischen und/oder elektronischen Ansteuerung des Azimutantriebs A. Eine strichpunktierte Steuerleitung in Fig. 1 verdeutlicht diese Ansteuerfunktion. Weitere, mit Doppelpfeil versehene Steuerleitungen verdeutlichen die hydraulische Steuerung der Scheibenbremsen 1.

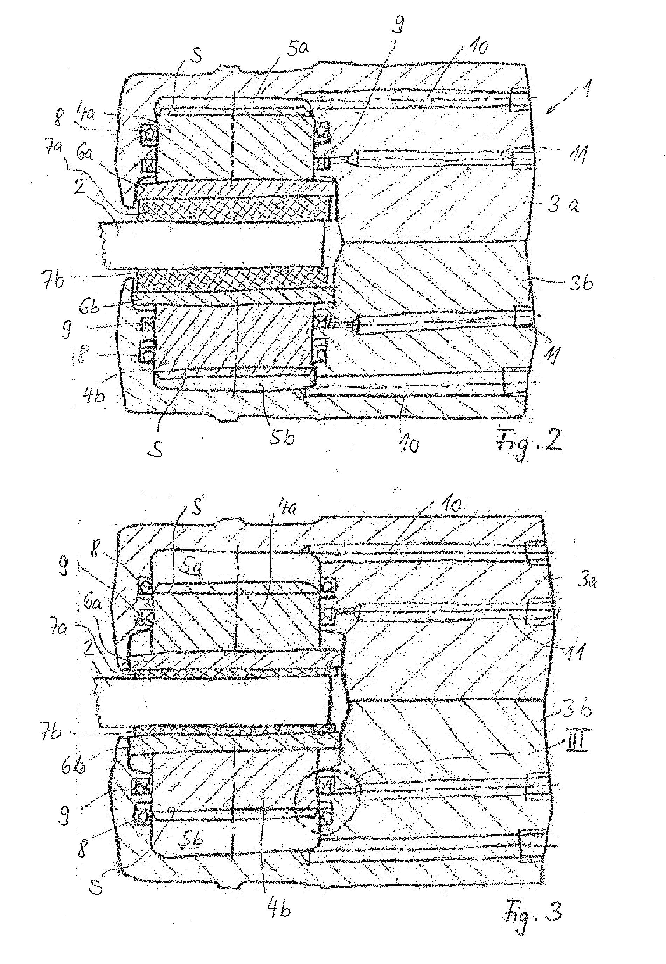

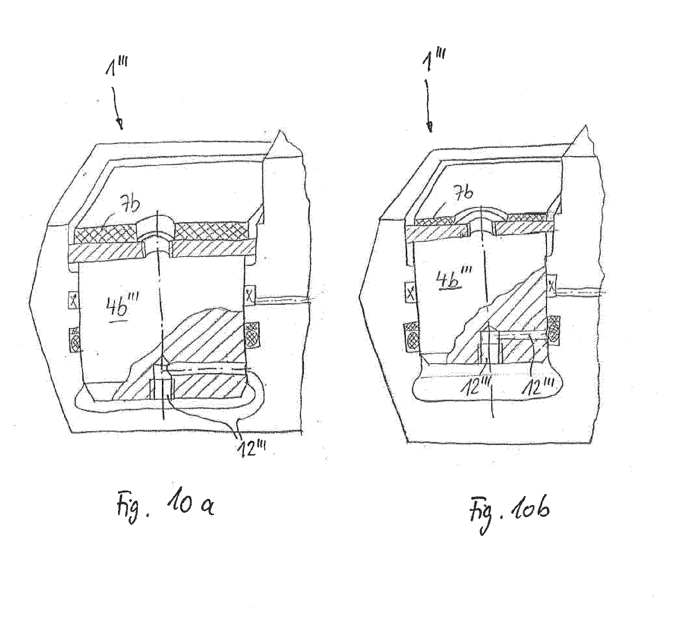

Jede der in Fig. 1 dargestellten Scheibenbremsen 1 ist nach einer der Ausführungsformen von Scheibenbremsen gestaltet, wie sie nachfolgend anhand der Fig. 2 bis 7 sowie 8a bis 10b beschrieben werden.

Die Scheibenbremse 1 nach den Fig. 2 bis 4 weist ein zweiteiliges Bremsengehäuse 3a, 3b auf, wobei die beiden Gehäuseteile 3a, 3b relativ zu einer Horizontalebene der Bremsscheibe 2 des Azimutantriebs (in montierter Position der Scheibenbremse 1) spiegelsymmetrisch gestaltet sind. Sowohl ein oberer Gehäuseteil 3a als auch ein unterer Gehäuseteil 3b des Bremsengehäuses 3a, 3b weisen jeweils einen Kolbenraum auf, in dem jeweils ein Bremskolben 4a, 4b hubverlagerbar gehalten ist. Jeder Bremskolben weist im Bereich seiner der Bremsscheibe 2 zugewandten Stirnseite einen metallischen Reibbelagträger 6a, 6b sowie einen mit der Bremsscheibe 2 in Berührung stehenden Reibbelag 7a, 7b auf. Jeder Reibbelag 7a, 7b wird durch den zugeordneten Reibbelagträger 6a, 6b getragen. Auf einer dem Reibbelagträger 6a, 6b abgewandten Stirnseite des jeweiligen Bremskolbens 4a, 4b weist der Kolbenraum innerhalb des Gehäuseteiles 3a, 3b einen Druckraum 5a, 5b auf, der über wenigstens einen Hydraulikkanal 10 mit Hydrauliköl beaufschlagbar ist. Der jeweilige Hydraulikkanal 10 ist in nicht näher dargestellter Weise mit einem Hydraulikkreislauf des Bremssystems verbunden, der durch die zuvor beschriebene Steuereinrichtung St gesteuert wird.

Jeder Bremskolben 4a, 4b ist mittels jeweils einer Ringdichtung 8 gegenüber dem Kolbenraum abgedichtet, die koaxial zu einer Mittellängsachse des Bremskolbens 4a, 4b den Bremskolben umschließt. Die Ringdichtung 8 ist zu dem jeweiligen Druckraum 5a, 5b für den jeweiligen Bremskolben 4a, 4b benachbart. Die Ringdichtungen 8 sind in Ringnuten des jeweiligen Gehäuseteiles 3a, 3b im Wandungsbereich des jeweiligen Kolbenraumes integriert. Die Ringdichtung 8 ist somit stationär im Kolbenraum positioniert, während der Bremskolben 4a, 4b innerhalb des Kolbenraumes hubbeweglich ist.

Die Ringdichtung 8 weist gemeinsam mit der Ringnut, in der die Ringdichtung 8 untergebracht ist, eine definierte Position relativ zum Bremskolben 4a, 4b in einer Ausgangslage der Bremskolben 4a, 4b gemäß Fig. 2 auf. Diese Ausgangslage ist definiert durch einen montierten Reibbelag 7a, 7b in seiner Ausgangsdicke zum Montagezeitpunkt des Reibbelages 7a, 7b am Reibbelagträger 6a, 6b, das heißt ohne bereits betriebsgemäß aufgetretene Verschleißerscheinungen, und in Anlageposition der Reibbeläge 7a, 7b an den gegenüberliegenden Stirnflächen der Bremsscheibe 2.

Der Weg, den ein dem Druckraum 5a, 5b zugewandter und an der Wandung des Kolbenraumes radial anliegender Stirnrand S des Bremskolbens 4a, 4b bei einer Bewegung des Bremskolbens 4a, 4b aus der Ausgangslage über die Betriebsdauer der Scheibenbremse bis zum Erreichen der Anlagefläche der Ringdichtung 8 zurücklegt, ist geringer oder maximal gleich einer Dicke des Reibbelages 7a - ebenfalls in Hubrichtung gesehen - in seinem unbenutzten Neuzustand. Wie anhand der Fig. 2 und 3 erkennbar ist, ist dieser Weg, den der Stirnrand S während der Betriebszeit der Scheibenbremse aufgrund des Verschleißes des Reibbelages 7a, 7b bis zum Überfahren der Ringdichtung 8 zurücklegt, geringer als die gleichgerichtete Dicke des Reibbelages 7a, 7b, wie Fig. 3 zu entnehmen ist. Denn in Fig. 3 hat der Stirnrand S den ringförmigen Anlagebereich der Ringdichtung 8 bereits überfahren, wobei bei dem Reibbelag 7a, 7b noch eine geringfügige Restdicke vorhanden ist.

Die Positionierung der Ringdichtung 8 relativ zum Stirnrand S ist beabsichtigt, um vor einem vollständigen Verschleiß des Reibbelages 7a, 7b eine Leckage des Druckraumes 5a zu erzwingen. Sobald ein entsprechender Leckageverlust auftritt, erfolgt bei Druckbeaufschlagung der Bremskolben 4a, 4b ein Druckabfall im Hydraulikkreislauf, der durch die Steuereinrichtung St mittels einer nicht dargestellten Drucksensorik erfasst werden kann. Abhängig von der Erfassung einer entsprechenden Leckage gibt die Steuereinrichtung einen entsprechenden Steuerbefehl, der entweder zu einem Abschalten, das heißt einem Drucklosschalten, der Scheibenbremse 1 führt, oder ein Abschalten des gesamten Azimutantriebs A bewirkt. Die Steuereinrichtung St kann auch derart ausgeführt sein, dass sowohl ein Stilllegen der jeweiligen Scheibenbremse 1 als auch ein Abschalten des Azimutantriebs A erfolgt.

Um zu vermeiden, dass eine entsprechende Leckagemenge zu einem Verölen der Reibbeläge und der Bremsscheibe 2 führt, sind jedem Bremskolben 4a, 4b als Teile von Mitteln zur Erfassung von Leckagemengen Abstreifmittel in Form eines Abstreifringes zugeordnet, der in einer zur Aufnahmenut für die Ringdichtung 8 parallelen Aufnahmeprofilierung 9 an der Wandung des Kolbenraumes integriert ist. Der Aufnahmeprofilierung ist wenigstens ein Ableitkanal 11 zugeordnet, der das durch den Abstreifring in die Aufnahmeprofilierung 9 geleitete Leckageöl in den Ableitkanal 11 umleitet. Der Ableitkanal 11 kann mit einem Speicher in Form eines Ölreservoirs verbunden sein, das an den wenigstens einen Hydraulikkreislauf angeschlossen ist. Es ist möglich, mehrere oder alle Ableitkanäle 11 der Scheibenbremsen 1 nach Fig. 1 in ein gemeinsames Ölreservoir zu leiten. Dem Ölreservoir kann ein Füllstandssensor zugeordnet sein, der die im Ölreservoir aufgefangenen Leckagemengen erfasst und entsprechende Sensorsignale an die Steuereinrichtung St weiterleitet.

In nicht dargestellter Weise kann auch dem wenigstens einen Ableitkanal 11 ein Hydrauliksensor zugeordnet sein, der das Auftreten entsprechender Leckagemengen erfasst. Auch ein derartiger Hydrauliksensor kann an die Steuereinrichtung für die Hydraulikkreisläufe angeschlossen sein und bei Erkennen einer Leckage ein entsprechendes Signal an die Steuereinrichtung St übermitteln.

Die Steuereinrichtung St kann derart ausgelegt sein, dass jede Scheibenbremse 1 separat ansteuerbar und demzufolge separat drucklos schaltbar ist. Alternativ kann eine gemeinsame Ansteuerung mehrerer Scheibenbremsen 1, vorzugsweise in Gruppen, erfolgen. Es ist auch möglich, dass die Steuereinrichtung St alle Scheibenbremsen 1, die im Bereich der Bremsscheibe 2 angeordnet sind, gemeinsam ansteuert. Für den Fall der gemeinsamen Ansteuerung aller Bremsen oder für den Fall der gruppenweisen Ansteuerung der Scheibenbremsen 1 wird die Steuereinrichtung St vorzugsweise bei Erfassen von Leckagemengen den gesamten Azimutantrieb A stillsetzen. Eine entsprechende Wartungsperson kann dann die Scheibenbremsen 1 auf Leckage untersuchen und bei der Scheibenbremse 1 oder den Scheibenbremsen 1, bei der oder denen die Wartungsperson einen entsprechenden Verschleiß der Reibbeläge 7a, 7b erkennt, die entsprechenden Scheibenbremsen 1 demontieren und die verschlissenen Reibbeläge durch neue Reibbeläge ersetzen.

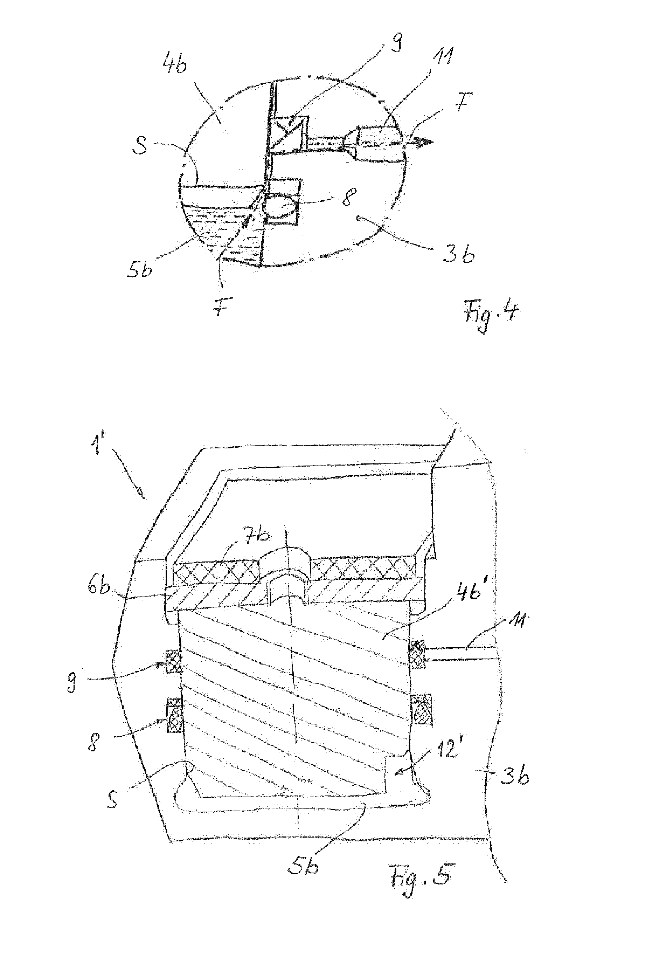

Anhand der Fig. 4 ist ein Fluidstrom F mit einer entsprechenden Leckagemenge verdeutlicht. Es ist erkennbar, dass Hydrauliköl aus dem Druckraum 5b an der Ringdichtung 8 vorbei in den schmalen Ringspalt zwischen dem Außenmantel des Bremskolbens 4b und der Zylinderwandung des Kolbenraumes dringen kann. Da das Hydrauliköl im Druckraum 5b unter Druck steht, wird der Fluidstrom F im Ringspalt bis zu der mit dem Abstreifring versehenen Aufnahmeprofilierung 9 gedrückt. Der Abstreifring leitet den Fluidstrom F um in den durch die Aufnahmeprofilierung 9 gebildeten Ringraum. Von dort wird der Fluidstrom F abgeleitet in den Ableitkanal 11.

Funktion und Anordnung der anhand der Fig. 5 bis 7 dargestellten Scheibenbremsen 1', 1" und 1"' entsprechen der zuvor beschriebenen Ausführungsform nach den Fig. 1 bis 4. Dies gilt auch für entsprechende Mittel zum Ableiten und Erfassen von Leckagemengen im Fall eines nahezu vollständigen Verschleißes der Reibbeläge, die einen Austausch der Reibbeläge notwendig machen. Zur Vermeidung von Wiederholungen wird daher auf die Ausführungen zu der Ausführungsform nach den Fig. 1 bis 4 verwiesen. Nachfolgend wird auf die wesentlichen Unterschiede der Ausführungsformen gemäß den Fig. 5 bis 7 eingegangen. Zum besseren Verständnis sind funktionsgleiche Teile und Abschnitte der Scheibenbremsen nach den Fig. 5 bis 7 mit gleichen Bezugszeichen versehen, aber unter Hinzufügung von "'", """ und ""'", jeweils unterschieden in die verschiedenen Ausführungsformen.

Bei den Scheibenbremsen 1', 1" und 1'" unterscheiden sich lediglich die Bremskolben von den Bremskolben gemäß der Ausführungsform nach den Fig. 2 bis 4. Die übrigen, schematisch dargstellten Teile und Abschnitte der Scheibenbremsen 1' bis 1"' sind identisch zur Scheibenbremse 1, so dass auch identische Bezugszeichen verwendet wurden. In den Fig. 5 bis 7 ist aus Übersichtlichkeitsgründen jeweils lediglich ein unterer Gehäuseteil 3b des Bremsengehäuses der jeweiligen Scheibenbremse 1' bis 1'" dargestellt. Demzufolge ist auch lediglich ein unterer Bremskolben 4b', 4b", 4b'" dargestellt. Die entsprechenden oberen Bereiche der Scheibenbremsen 1' bis 1"' können spiegelsymmetrisch ergänzt werden, wie auch bei der Scheibenbremse 1 die oberen Bereiche entsprechend spiegelsymmetrisch gestaltet sind.

Bei der Ausführungsform nach Fig. 5 ist die Scheibenbremse 1' im Bereich jedes Bremskolbens 4b' mit einer Leckageprofilierung 12' versehen, die sich als nutförmiger Leckagekanal von einer dem Druckraum 5b zugewandten Stirnseite des Bremskolbens 4b' über eine definierte axiale Länge parallel zu einer Hubachse (siehe strichpunktierte Darstellung in Fig. 5) des Bremskolbens 4b' seitlich am Bremskolbenmantel erstreckt. Es können mehrere, über den Umfang des Kolbenmantels des Bremskolbens 4b' verteilt angeordnete, nutförmige Leckagekanäle 12' vorgesehen sein, die jeweils identische Abmessungen aufweisen. Die axiale Länge der Leckageprofilierung 12' ausgehend von einem Stirnrand S des Bremskolbens 4b' in Richtung des Reibbelagträgers 6b entspricht einer Dicke des Reibbelages 7b in unbenutzter Ausgangslage des Reibbelages 7b zum Montagezeitpunkt. Diese axiale Länge kann auch etwas geringer sein als die Dicke des Reibbelages 7b, so dass Leckage bereits auftritt, kurz bevor der Reibbelag 7b durch Verschleiß im Betrieb der Scheibenbremse 1' vollständig aufgerieben ist. Die Leckageprofilierung 12' kann als Einfräsung im Bremskolben 4b'gestaltet sein.

In Abstand oberhalb der Ringdichtung 8, das heißt auf einer dem Reibbelagträger 6b zugewandten Seite, ist eine Aufnahmeprofilierung 9 vorgesehen, die mit einem Abstreifring sowie einer ringförmigen Lippendichtung versehen ist. Von der Aufnahmeprofilierung 9 führt radial wenigstens ein Ableitkanal 11 ab, der zu einem Ölreservoir oder einem anderen Funktionsbereich des Hydraulikkreislaufes führt.

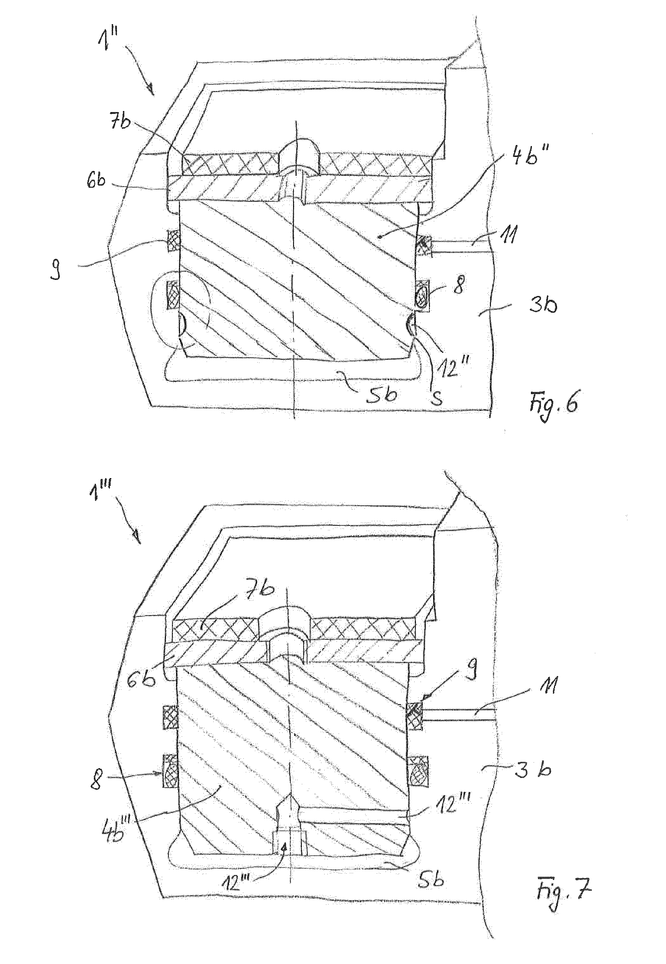

Bei der Ausführungsform nach Fig. 6 ist eine Leckageprofilierung 12" vorgesehen, die sich als radiale Ringnut umlaufend über den Außenmantel des Bremskolbens 4b" erstreckt und vorzugsweise durch spanende Bearbeitung in den Außenmantel des Bremskolbens 4b" eingearbeitet ist. Die Leckageprofilierung 12" ist unmittelbar benachbart zu dem Stirnrand S des Bremskolbens 4b", der umlaufend radial an der Wandung des Kolbenraumes anliegt. Der Abstand dieser als Ringnut gestalteten Leckageprofilierung 12" im Ausgangszustand des Reibbelages 7b zur Ringdichtung 8 ist etwas geringer als die Dicke des Reibbelages 7b in seinem Ausgangszustand, so dass bei nahezu vollständigem Verschleiß des Reibbelages 7b im Betrieb der Scheibenbremse 1" Leckagemengen des Hydrauliköls über die Ringnut 12" an der Ringdichtung 8 axial vorbeigeleitet und im Bereich der Aufnahmeprofilierung 9 mit ihrem Abstreifring aufgenommen und in den Ableitkanal 11 abgeleitet werden. Bei der Scheibenbremse 1'" ergibt sich die gleiche Leckagefunktion wie bei der Scheibenbremse 1". Dort wird der gewünschte Leckagestrom im Bremsenbetrieb jedoch durch eine Leckageprofilierung 12"' mit einer im Bremskolben 4b'" radial nach außen geführten Leckagebohrung 12'" sowie einer zentralen, von der dem Druckraum 5b zugewandten Stirnseite des Bremskolbens 4b'" her eingebrachten Leckagebohrung gebildet. Die zentrale, axial ausgerichtete Leckagebohrung und der radial nach außen führende Leckagekanal der Leckageprofilierung 12'" gehen ineinander über.

Bei allen Ausführungsformen nach den Fig. 5 bis 7 können identische Bremsengehäuse eingesetzt werden. Die jeweils gewollte Leckage bei zu starkem Verschleiß der Reibbeläge erfolgt durch Bearbeitung der Bremskolben, ohne dass entsprechende Passungen zwischen Bremskolben und Kolbenräumen der Bremsengehäuse hierdurch beeinflusst sind.

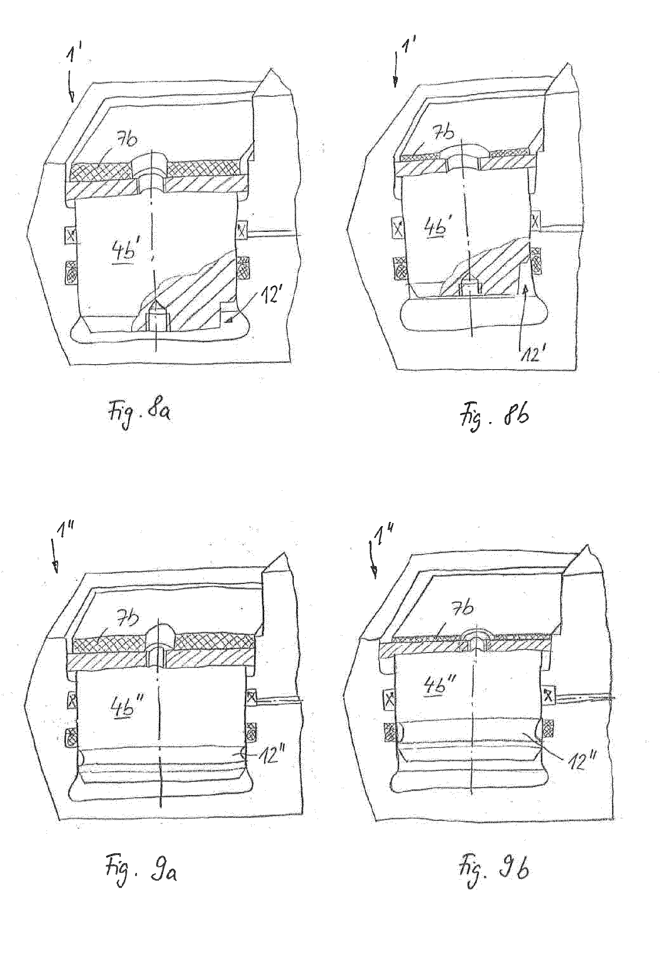

Anhand der Fig. 8a und 8b bzw. 9a und 9b bzw. 10a und 10b sind die zuvor beschriebenen unterschiedlichen Verschleißzustände der Reibbeläge 7b der Scheibenbremsen 1', 1" und 1"' noch einmal dargestellt. Dabei ist jeweils in der linken Darstellung (Fig. 8a, 9a und 10a) der Reibbelag 7b in der Ausgangslage gemäß den Fig. 5, 6 und 7 dargestellt. Anhand der Fig. 8b, 9b und 10b sind die Verschleißzustände der Reibbeläge 7b zum Zeitpunkt der Notwendigkeit des Austausches der Reibbeläge dargestellt. Diese Verschleißzustände nach den Fig. 8b, 9b und 10b stellen gleichzeitig auch die Zustände der Scheibenbremsen 1', 1 " und 1"' dar, bei denen eine gewollte Leckage über die Leckageprofilierungen 12', 12" und 12"' erfolgt, wie dies zuvor bereits beschrieben wurde.

## Patentansprüche

1. Hydraulisch betätigbare Scheibenbremse, insbesondere für einen Azimutantrieb einer horizontal drehbaren Gondel einer Windkraftanlage, mit einem Bremsengehäuse, das einen Kolbenraum umfasst, in dem wenigstens ein Bremskolben hubbeweglich gelagert ist, der einen Reibbelag auf einer einer abzubremsenden Bremsscheibe zugewandten Stirnseite umfasst, und dem auf einer gegenüberliegenden Stirnseite als Teil des Kolbenraumes ein Druckraum zugeordnet ist, der zur Betätigung des Bremskolbens durch ein Hydraulikmedium druckbeaufschlagbar ist, wobei dem Bremskolben oder dem Kolbenraum wenigstens eine Ringdichtung zugeordnet ist, die den Bremskolben gegenüber dem Druckraum abdichtet, **dadurch gekennzeichnet, dass** in einer an der Bremsscheibe (2) anliegenden Funktionsstellung des montierten Reibbelages (7a, 7b) die Ringdichtung (8) in einem Abstand - in Hubrichtung des Bremskolbens (4a, 4b; 4b'; 4b"; 4b"') gesehen - zu einem dem Druckraum zugewandten Stirnrand (S) des Bremskolbens (4a, 4b; 4b'; 4b"; 4b"') angeordnet ist, der kleiner oder gleich einer Dicke des Reibbelages (7a, 7b) bezogen auf einen Ausgangszustand des Reibbelages zum Montagezeitpunkt ist.

2. Hydraulisch betätigbare Scheibenbremse nach dem Oberbegriff des Anspruchs 1, **dadurch gekennzeichnet, dass** der Bremskolben (4b'; 4b"; 4b'") wenigstens eine Leckageprofilierung (12', 12", 12"') aufweist, die an einem Kolbenmantel des Bremskolbens derart angeordnet ist, dass in einer an der Bremsscheibe (2) anliegenden Funktionsstellung des montierten Reibbelages (7b) ein Abstand der Leckageprofilierung (12', 12", 12"') geringer oder gleich einer Dicke des Reibbelages (7b) bezogen auf einen Ausgangszustand des Reibbelages zum Montagezeitpunkt ist.

3. Hydraulisch betätigbare Scheibenbremse nach Anspruch 1 oder 2, **dadurch gekennzeichnet, dass** Mittel zum Erfassen einer im Bereich der Ringdichtung (8) auftretenden Leckage vorgesehen sind.

4. Hydraulisch betätigbare Scheibenbremse nach einem der vorhergehenden Ansprüche, **dadurch gekennzeichnet, dass** das Bremsengehäuse (3a, 3b) zwei gegenläufig zueinander bewegliche Bremskolben (4a, 4b; 4b'; 4b"; 4b"') umfasst, die in montiertem Zustand zwischen sich die Bremsscheibe (2) einschließen.

5. Hydraulisch betätigbare Scheibenbremse nach Anspruch 2, **dadurch gekennzeichnet, dass** die Leckageprofilierung (12", 12"') eine in Umfangsrichtung am Kolbenmantel umlaufende Ringnut umfasst.

6. Hydraulisch betätigbare Scheibenbremse nach wenigstens einem der vorhergehenden Ansprüche, **dadurch gekennzeichnet, dass** die Leckageprofilierung (12', 12"') wenigstens einen sich mit zumindest einer Richtungskomponente in Hubrichtung des Bremskolbens (4b) erstreckenden Leckagekanal umfasst.

7. Hydraulisch betätigbare Scheibenbremse nach Anspruch 6, **dadurch gekennzeichnet, dass** der wenigstens eine Leckagekanal (12"') als am Kolbenmantel vorgesehene Leckagenut und/oder als sich von einer dem Druckraum (5b) zugewandten Stirnseite des Bremskolbens (4b'; 4b"') bis zu einem seitlichen Austritt am Kolbenmantel erstreckende Leckagebohrung gestaltet ist.

8. Hydraulisch betätigbare Scheibenbremse nach einem der vorhergehenden Ansprüche, **dadurch gekennzeichnet, dass** dem Kolbenraum wenigstens eine den Bremskolben (4a, 4b; 4b'; 4b"; 4b"') koaxial umgebende Aufnahmeprofilierung (9) für Leckagemengen zugeordnet ist, die in Druckrichtung des Bremskolbens hinter der Ringdichtung (8) angeordnet und mit einem Ableitanschluss (11) zur Abführung der Leckagemengen verbunden ist.

9. Hydraulisch betätigbare Scheibenbremse nach Anspruch 8, **dadurch gekennzeichnet, dass** der Aufnahmeprofilierung (9) am Umfang des Bremskolbens anliegende Abstreifmittel zugeordnet sind, die die Leckagemengen vom Bremskolben weg in den Ableitanschluss (11) umleiten.

10. Azimutantrieb einer horizontal drehbaren Gondel einer Windkraftanlage mit mehreren Scheibenbremsen nach einem der vorhergehenden Ansprüche, die einer Bremsscheibe (2) des Azimutantriebs zugeordnet sind, sowie mit einer Steuereinrichtung (St) zur Ansteuerung der Scheibenbremsen (1), **dadurch gekennzeichnet, dass** die Steuereinrichtung (St) mit Mitteln zum Erfassen einer im Bereich einer Ringdichtung (8) wenigstens eines Bremskolbens (4a, 4b; 4b'; 4b"; 4b"') auftretenden Leckage verbunden ist.

11. Azimutantrieb nach Anspruch 10, **dadurch gekennzeichnet, dass** die Steuereinrichtung (St) den Azimutantrieb (A) bei Erkennen einer Leckage abschaltet oder die wenigstens eine Scheibenbremse (1) drucklos schaltet, bei der die Leckage erfasst wurde.

12. Azimutantrieb nach Anspruch 11, **dadurch gekennzeichnet, dass** die Steuereinrichtung Mittel zum separaten Ansteuern jeder Scheibenbremse (1) aufweist.
